Europäisches Patentamt

European Patent Office

Office européen des brevets

(19)

(11) Veröffentlichungsnummer: **0 074 415**
**B2**

(12) **NEUE EUROPÄISCHE PATENTSCHRIFT**

(45) Veröffentlichungstag der neuen Patentschrift:
**28.11.90**

(21) Anmeldenummer: **81107111.7**

(22) Anmeldetag: **10.09.81**

(51) Int. Cl.⁵: **G 01 N 25/08**

(54) **Verfahren und Vorrichtung zum Ermitteln der Siedetemperatur von hygroskopischen Flüssigkeiten.**

(43) Veröffentlichungstag der Anmeldung:
**23.03.83 Patentblatt 83/12**

(45) Bekanntmachung des Hinweises auf die
Patenterteilung:
**27.02.85 Patenblatt 85/09**

(45) Bekanntmachung des Hinweises auf die
Entscheidung über den Einspruch:
**28.11.90 Patentblatt 90/48**

(84) Benannte Vertragsstaaten:
**AT CH DE FR GB IT LI**

(56) Entgegenhaltungen:
**EP-A-0 056 424**
**DE-A-2 305 586**
**DE-A-2 655 343**
**DE-A-2 721 232**
**FR-A-2 336 677**
**US-A-3 564 900**

(73) Patentinhaber: **FAG KUGELFISCHER GEORG
SCHÄFER Kommanditgesellschaft auf Aktien
Georg-Schäfer-Strasse 30 Postfach 1260
D-8720 Schweinfurt (DE)**

(72) Erfinder: **Peuker, Karl, Dipl.-Ing.
Max-Reger-Strasse 19
D-8603 Ebern (DE)**
Erfinder: **Spindler, Franz
Albersdorf 21
D-8603 Ebern (DE)**
Erfinder: **Neubauer, Ottmar
Haus Nr. 95
D-8601 Rentweinsdorf (DE)**

(74) Vertreter: **Rehmann, Klaus H.
Postfach 1260 (FAG) Hauptbahnhofstrasse
D-8720 Schweinfurt (DE)**

EP 0 074 415 B2

Courier Press, Leamington Spa, England.

**Beschreibung**

Die Erfindung betrifft ein Verfahren und eine Vorrichtung zum Ermitteln der Siedetemperatur von hygroskopischen Flüssigkeiten, vorzugsweise für hydraulisch betätigte Einrichtungen, wie Bremsen, Kupplungen u.ä.

Aus der US—A—3 564 900 ist ein Siedepunktemßgerät (End-point-Analyser) bekannt, bei dem eine geringe Menge einer zu testenden Flüssigkeit in eine Schale die aufheizbar ist eingebracht wird. Beim Aufheizen ergibt sich ein Temperaturverlauf bei dem die Temperatur zunächst bis zur Sättigungstemperatur stetig, bei der die Verdampfung des Stoffes mit dem niedrigsten Dampfpunkt beginnt. Diese Temperatur bleibt solange bestehen bis alle Flüssigkeit dieses Stoffs verdampft ist. Erst dann steigt die Temperatur wieder an.

Nachteilig dabei ist das umständliche Verfahren (Labormäßige Bedingungen) das ein Entnehmen der Flüssigkeit erforderlich macht, äußerste Sauberkeit erfordert und deshalb in einer Werkstatt nicht immer eingesetzt werden kann.

In EP—Anmeldung Nr. 81100334.2 (EP—A Nr. 56424, veröffentlicht am 28.07.82) ist ein Verfahren zur Bestimmung des Siedepunktes von Bremsflüssigkeit durch Erhitzen bis zum Siedepunkt beschrieben, bei dem die Bremsflüssigkeit von einem Heizelement erhizt wird, die Temperatur und die zeitliche Temperaturänderung des Heizelements gemessen werden und bei einer Änderung der zeitlichen Temperaturänderung die gerade erreichte Temperatur registriert wird und als Mass für den Siedepunkt der Bremsflüssigkeit dient. Die entsprechende Vorrichtung zur Durchführung dieses Verfahrens besteht aus einer in die Bremsflüssigkeit getauchten Messsonde, die einen Hohlraum aufweist, in dessen oberem luft- und gasdichten Bereich ein Heizelement und ein Temperaturfühler angeordnet sind und die von dem Temperaturfühler ermittelten Werte einer Anzeige- und Auswerteelektronik zugeführt werden, wobei der untere Bereich des Hohlraums mit mindestens einer Öffnung zum Eindringen der Bremsflüssigkeit versehen ist.

Nachteilig bei diesem Verfahren und der entsprechenden Vorrichtung ist die relativ aufwendige und messtechnisch nicht einfach zu ermittelnde zeitliche Temperaturänderung. Dazu muss nämlich während des Messvorgangs laufend die Temperaturänderung des Heizelements erfasst werden und mit dem jeweils vorhergehenden Wert verglichen werden, damit die sich bei Bildung von Dampfblasen veränderte Steigung der Temperaturverlaufskurve festgestellt wird.

Nachteilig an der entsprechenden Vorrichtung ist die Tatsache, dass die Messsonde mit einem Hohlraum versehen sein muss, der eine absperrbare Entlüftungseinrichtung aufweist. Im Betrieb kann nicht immer sichergestellt sein, dass beim Eintauchen der Messsonde in die Flüssigkeit der Hohlraum auch ausreichend entlüftet wurde. Ausserdem besteht die Gefahr, dass nach dem Messvorgang Restflüssigkeit im Hohlraum verbleibt, die dann, wenn anschliessend eine andere Flüssigkeit gemessen wird, in die neu zu messende Flüssigkeit gelangt und dadurch zu einem Verfälschen des Messergebnisses führt, ebenso, wie es zur Verunreinigung brauchbarer Flüssigkeiten durch nichtbrauchbare Flussigkeit kommen kann.

Aus der US—A—2 832 219 sind ein Verfahren und eine Vorrichtung zum Ermitteln des Luftdrucks über die Siedetemperatur von Flüssigkeiten, bekannt bei dem eine Meßsonde, bestehend aus einem Heizelement und einem Temperaturmeßelement, in die Flüssigkeit, deren Siedetemperatur ermittelt werden soll, während der Meßdauer eingetaucht wird, das Heizelement elektrisch derartig aufgeheizt wird, daß eine örtliche Verdampfung der Flüssigkeit erfolgt, wobei die Meßsonde derart ausgebildet ist und derart in die Flüssigkeit eingetaucht wird, daß die sich am Heizelement (3') bildenden Dampfblasen ungehindert nach oben aufsteigen können.

Es ist Aufgabe der Erfindung, ein Verfahren und eine Vorrichtung zur Ermittlung der Siedetemperatur von hygroskopischen Flüssigkeiten aufzuzeigen, welches sowohl in der Anwendung als auch im konstruktiven Aufbau einfach und betriebssicher ist und die vorgenannten Nachteile vermeidet.

Die Lösung der Aufgabe ist aus Anspruch 1 bzw. Anspruch 3 zu entnehmen. Weitere vorteilhafte Ausführungen enthalten die Unteransprüche.

Durch das erfindungsgemässe Verfahren und die Vorrichtung ist es nun möglich, die Ermittlung des Siedepunktes der Flüssigkeit sowohl von der Bedienungs- als auch von der Auswertungsseite her und von der Ausgestaltung der Messsonde zu vereinfachen. Die Erfindung macht sich nämlich das physikalische Prinzip zunutze, dass bei Erreichen des Siedepunktes einer Flüssigkeit die zunächst bei Beheizung stetig steigende Temperatur des Heizelements bei der Bilding der Dampfblasen konstant bleibt (Verdampfungswärme). Da sichergestellt ist, dass die sich örtlich am Heizelement bildenden Dampfblassen weggeführt werden, strömt immer neue Flüssigkeit nach, die nun ihrerseits erhizt wird. Natürlich muss die Leistung des Heizelements ausreichend sein, damit eine örtliche Überhitzung und die Bildung von Dampfblasen erzeilt wird. Andererseits darf die Heizleistung nicht so gross gewählt werden, dass bereits während des Messvorgangs die gesamte zu prüfende Flüssigkeit verdampft.

Beispiele

1. Ein Kaltleiterplatinelement mit einem elektrischen Widerstand von 15 $\Omega$ und einer Fläche der Heizwendel von 4 × 4 mm wurde in Bremsflüssigkeit mit dem Volumen von 20 cm$^3$ vollständig eingetaucht und eine elektrische Spannung von 14V angelegt. Bereits nach 10 s Heizzeit bildeten sich am Heizelement Dampfblasen, die nach oben aufstiegen, und am Temperaturmessgerät stellte sich eine konstante Temperatur des Heizelements ein, die als Mass für den Siedepunkt der geprüften Bremsflüssigkeit diente.

2. Ein Kaltleiterplatinelement mit einem elektrischen Widerstand von 8 Ω und einer Heizfläche von 4 × 4 mm wurde in ein Bremsflüssigkeitsvolumen von 250 cm³ vollständig eingetaucht. Nach Anlegen einer Heizspannung von 9 V bildeten sich ebenfalls nach ca. 10 s Dampfblasen, die nach oben aufstiegen, wobei am Temperaturmessgerät wiederum die als Mass für den Siedepunkt der geprüften Bremsflüssigkeit dienende konstante Temperatur angezeigt wurde.

Die Vorrichtung nach der Erfindung kann auch dazu verwendet werden, den Stand der Flüssigkeit in einem Behälter zu ermitteln. Falls das Heizelement nicht vollständig in die Flüssigkeit eingetaucht ist, stellt sich keine konstante Temperatur ein, sondrn das Heizelement wird stetig bis zur Temperaturbegrenzung weiter aufgeheizt. Falls also die Temperaturanzeige diesen Endwert anzeigt, kann daraus geschlossen werden, dass z.B. nicht mehr genügend Bremsflüssigkeit im Vorratsbehälter vorhanden ist.

Die Auswerteelektroik kann beispielsweise als Analoganzeige ausgeführt sein oder mittels Leuchtdioden erfolgen, die zweckmässigerweise drei Bereiche anzeigen, nämlich:
grün — für Flüssigkeiten mit zur Verwendung in hydraulischen Systemen ausreichend hohem Siedepunkt,
rot — für Flüssigkeiten mit nicht ausreichend hohem Siedepunkt,
gelb — für Flüssigkeiten mit gerade noch ausreichend hohem Siedepunkt.

Die Messonde kann auch in einem Zuspannelement (Radzylinder, Bremssattel) oder im Bremmschlauch eingebaut sein, da erfahrungsgemäss der Siedepunkt der Bremsflüssigkeit an diesen Stellen um einige Grad niedriger liegt als im Vorratsbehälter.

Ebenfalls kann die Messsonde auch in den Dekkel des Vorratsbehälters integriert sein und so im Rahmen der sogenannten *checkcontrol,* die dem Fahrer eines Kraftfahrzeugs anzeigt, ob der Siedepunkt der Bremsflüssigkeit noch in einem für die Sicherheit zulässigen Bereich liegt, verwendet werden.

Die Erfindung soll an einem Ausführungsbeispiel näher erläutert werden.

Fig. 1 zeigt schematisch einen Hauptbremszylinder mit einer im Vorratsbehälter eingetauchten Messsonde mit der Auswerteelektronik.

Fig. 2 zeigt den zeitlichen Verlauf der Temperatur während eines Mossvorgangs.

Fig. 3 zeigt eines Vorrichtung gemäss der Erfindung im Schnitt vor Erreichen des Siedepunktes der Flüssigkeit.

Fig. 4 zeigt eine Vorrichtung gemäss der Erfindung im Schnitt nach Erreichen des Siedepunktes der Flüssigkeit.

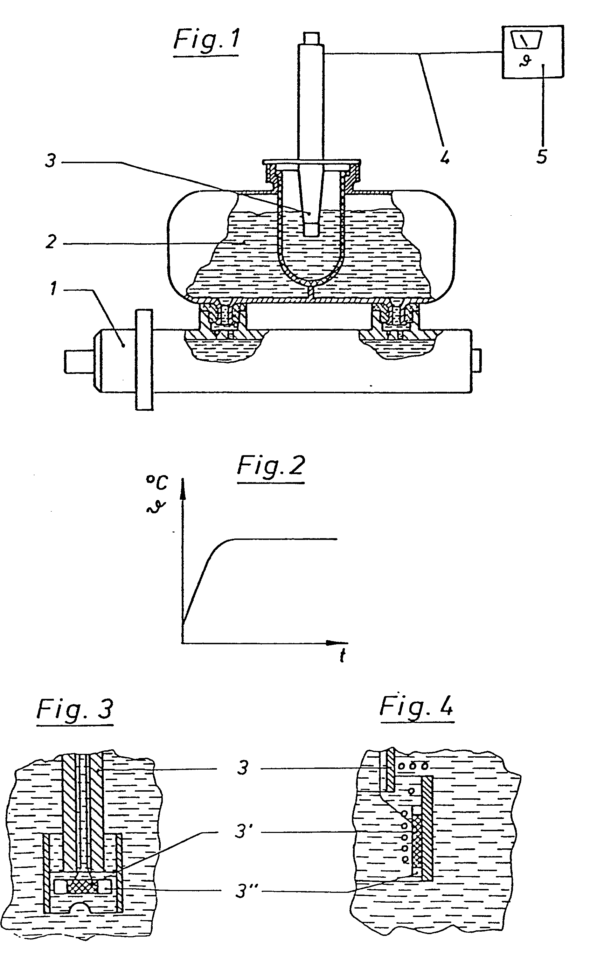

In Fig. 1 ist der Hauptbremszylinder mit 1 bezeichnet, auf welchem ein Vorratsbehälter 2 angebracht ist, in dem eine Messsonde 3 angeordnet ist, die über ein Kabel 4 mit einer Anzeige- und Auswerteelektronik 5 in Verbindung steht.

Wie aus Fig. 2 ersichtlich, steigt nach Anlegen der Heizspannung die Temperatur des Heizelements zunächst stetig an und geht bei Erreichen des Siedepunktes der Flüssigkeit in einen konstanten Wert über. Diese Temperatur wird angezeigt und dient nun als Mass für den Siedepunkt der Flüssigkeit.

Die in Fig. 3 und 4 gezeigte Messsonde 3 wird vozugsweise senkrecht in die Flüssigkeit eingetaucht, so dass die sich bildenden Dampfblasen ungehindert nach oben aufsteigen können. In vorteilhafter Weise sind Temperaturmesselement 3'' und Heizelement 3' zu einer Einheit zusammengefasst, indem z.B. ein Kaltleiterwiderstand verwendet wird, der sowhol heizt, als auch seinen Widerstand temperaturabhängig ändert. Dabei kann zum Schutz des Kaltleiterelements eine Umhüllung vorgesehen sein, oder das Heizelement 3' ist in einem rohrförmigen Messkopf angerodnet, der jedoch ein Aufsteigen der sich bildenden Dampfblasen gewährleisten muss.

Durch die vorliegende Erfindung wurde ein einfach zu handhabendes und leicht auch für den Laien durchzuführendes Verfahren zur Bestimmung des Siedepunktes von hygroskopischen Flüssigkeiten aufgezeigt. Die praktische Anwendung des Verfahrens ermöglicht jedem Autofahrer die Überprüfung, ob die in seinem Fahrzeug befindliche Bremsflüssigkeit einen ausreichend hohen Siedepunkt aufweist oder nicht.

**Patentansprüche**

1. Verfahren zum Ermitteln der Siedetemperatur von hygroskopischen Flüssigkeiten, vorzugsweise für hydraulisch zu betätigende Einrichtungen, wie Bremsen und Kupplungen, bei dem eine Meßsonde (3), bestehend aus einem Heizelement (3') und einem Temperaturmeßelement (3''), in die Flüssigkeit, deren Siedetemperatur ermittelt werden soll, während der Meßdauer vollständig eingetaucht wird, das Heizelement (3') elektrisch derartig aufgeheizt wird, daß eine örtliche Verdampfung der Flüssigkeit erfolgt, wobei die Meßsonde derart ausgebildet ist und derart in die Flüssigkeit eingetaucht wird, daß die sich am Heizelement (3') bildenden Dampfblasen ungehindert nach oben aufsteigen können, und die sich infolge der Dampfblasenbildung einstellende konstante Temperatur des Heizelements (3') von dem Temperaturmeßelement (3'') gemessen wird und als Maß für den Siedepunkt der Flüssigkeit dient.

2. Verfahren nach Anspruch 1, dadurch gekennziechnet, daß die Temperaturmessung mittels elektrischer Widerstandsmessung erfolgt, wobei der elektrische Widerstand das Heizelement (3') ist, das vorzugsweise als Kalt- oder Heißleiterwiderstand ausgeführt ist.

3. Vorrichtung zur Durchführung des Verfahrens nach Anspruch 1, die eine Meßsonde (3), bestehend aus einem Heizelement (3') und einem Temperaturmeßelement (3''), sowie eine Anzeige- und Auswerteelektronik (5), aufweist, bei der das Temperaturmeßelement (3'') die Temperatur des Heizelements (3') mißt, die Meßsonde (3) so ausgebildet ist, daß sie während der Meßdauer vollständig in die Meßflüssigkeit eintauchbar ist und daß die sich im eingetauchten Zustand am Heizelement (3') bildenden Dampfblasen ungehindert nach oben aufsteigen können, und die Anzeige und Auserteelektronik zur Erfassung der sich infolge der Dampfblasenbildung einstellenden konstanten Temperatur des Heizelements ausgebildet ist.

4. Vorrichtung nach Anspruch 3, dadurch gekennzeichnet, daß das Heizelement (3') und das Temperaturmeßelement (3'') als ein einziger elektrischer Widerstand, vorzugsweise als Kalt- oder Heißleiterwiderstand ausgebildet ist.

5. Vorrichtung nach Anspruch 4, dadurch gekennzeichnet, daß die Meßsonde (3) mit einer integrierten Analog- oder Leuchtdiodenanzeige versehen ist.

6. Vorrichtung nach den Ansprüchen 1 bis 4, dadurch gekennziechnet, daß die Meßsonde (3) in den Deckel des Vorratsbehälters (2) eines Bremszylinders integriert ist.

## Revendications

1. Procédé pour la détermination de la température d'ébullition de liquides hygroscopiques, notamment pour des intallations à commande hydraulique telles que freins et embrayages, dans lequel une sonde de mesure (3) consistant en un élément de chauffage (3') avec un élément de mesure de la température (3'') est, durant toute la mesure, complètement immergée dans le liquide dont le point d'ébullition doit être déterminé, l'élément de chauffage (3') étant électriquement chauffé de telle façon qu'il s'ensuive une évaporation locale du liquide, la sonde de mesure étant constituée de telle façon, et immergée dans le liquide de telle façon que les bulles de vapeur qui se forment sur l'élément de chauffage (3') peuvent se déplacer librement vers le haut, et la température constante de l'élément chauffant (3'), qui s'établit par suite de la formation de bulles de vapeur, étant mesurée au moyen de l'élément de mesure de la température (3'') et servant de mesure pour le point d'ébullition du liquide.

2. Procédé selon la revendication 1, caractérisé en ce que la température est mesurée au moyen d'une résistance électrique, celle-ci étant l'élément chauffant (3') qui est de préférence réalisé comme thermistor à coefficient de température positif ou négatif.

3. Dispositif pour la mise en pratique du procédé selon la revendication 1, qui comporte une sonde de mesure (3) constituée par un élément chauffant (3') et un élément de mesure de température (3'') ainsi que par un dispositif électronique d'indication et d'appréciation (5), dans lequel l'élément de mesure de température (3'') mesure la température de l'élément chauffant (3'), la sonde de mesure (3) est constituée de telle façon qu'elle peut être immergée totalement dans le liquide à étudier, et que les bulles de vapeur qui se forment sur l'élément chauffant (3') quand il est immergé peuvent se déplacer librement vers le haut, et le dispositif électronique d'indication et d'appréciation est constitué pour indiquer la température constante de l'élément chauffant, qui s'établit par suite de la formation des bulles.

4. Dispositif selon la revendication 3, caractérisé en ce que l'élément chauffant (3') et l'élément de mesure de température (3'') sont conçus comme une résistance électrique, de préférence comme thermistor à coefficient de température positif ou négatif.

5. Dispositif selon la revendication 4, caractérisé en ce que la sonde de mesure (3) est équipée d'un indicateur analogique ou à diodes lumineuses intégré.

6. Dispostif selon les revendications 1 à 4, caractérisé en ce que la sonde de mesure (3) est intégrée dans le couvercle du réservoir (2) d'un cylindre de frein.

## Claims

1. A method of ascertaining the boiling temperature of a hygroscopic fluid, preferably a fluid for a hydraulically operable appliance such as a brake or a clutch, wherein a test probe (3) comprising a heating element (3') and a temperature-measuring element (3'') is dipped completely for the duration of measuring into the fluid the boiling temperature of which requires to be ascertained, wherein the heating element (3') is heated electrically to an extent sufficient to cause localized vaporization of the fluid, and wherein the test probe is constructed and dipped into the fluid in such a way that the vapour bubbles formed at the heating element (3') will unimpededly rise and that the heating element's (3') constant temperature brought about by the bubble formation is ascertained by the measuring element (3'') and serves as the datum for the fluid's boiling point.

2. A method according to claim 1, characterized in that the temperature is measured by measuring the electric resistance, and in that the heating element (3') constitutes the electric resistor and, preferably, is a barretter or a thermistor.

3. An appliance for carrying out the method claimed in claim 1, wherein the appliance includes the test probe (3) comprising the heating element (3'), the temperature-measuring element (3'') and electronic indication and evaluation means (5), wherein the measuring element (3'') serves to ascertain the temperature of the heating element (3'), wherein the probe (3) is constructed so that it is capable of remaining — for the duration of measuring — dipped in the fluid the temperature of which requires to be ascertained and so that, while the probe remains dipped, the vapour bubbles forming at the heating element (3') will unimpededly rise, and wherein the electronic indication and evaluation means serve to determine the heating element's constant temperature brought about by the bubble formation.

4. An appliance according to claim 3, characterized in that the heating element (3') and the measuring element (3'') are combined to form a single electric resitor, preferably a barretter or a thermistor.

5. An appliance according to claim 4, characterized in that the probe (3) is provided with an integral analogue indicator or integral light-emitting diodes.

6. An appliance according to any of the claims 1 to 4, characterized in that the probe (3) is joined integrally to the cover of a brake cylinder's reservoir (2).

_Fig.1_

3

2

1

4

5

_Fig.2_

°C

ϑ

t

_Fig. 3_

_Fig. 4_

3

3'

3''